# EUROPÄISCHE PATENTSCHRIFT

(11) **EP 4 434 020 B1**
(45) Veröffentlichungstag und Bekanntmachung des Hinweises auf die Patenterteilung: **14.10.2026**
(21) Anmeldenummer: 22817750.7
(22) Anmeldetag: 16.11.2022
(51) Int. Cl.: G08G 1/01, G06V 20/54, G08G 1/015, G08G 1/017

(54) **VERFAHREN UND VORRICHTUNG ZUR ERKENNUNG DER GÜLTIGKEIT EINES FAHRZEUGPARAMETERS**
METHOD AND DEVICE FOR RECOGNISING THE VALIDITY OF A VEHICLE PARAMETER
PROCÉDÉ ET DISPOSITIF DE RECONNAISSANCE DE LA VALIDITÉ D'UN PARAMÈTRE DE VÉHICULE

(30) Priorität: 17.11.2021 DE 102021130032
(43) Veröffentlichungstag der Anmeldung: 25.09.2024
(73) Patentinhaber: Jenoptik Robot GmbH, 40789 Monheim (DE)
(72) Erfinder: PRÖFROCK, Dima, 40789 Monheim (DE); TRUMMER, Michael, 40789 Monheim (DE)
(74) Vertreter: Waldauf, Alexander
(86) Internationale Anmeldenummer: PCT/EP2022/082141
(87) Internationale Veröffentlichungsnummer: WO 2023/088971

(56) Entgegenhaltungen:
- WO-A1-2020/210290
- US-A1- 2014 257 943
- US-A1- 2016 293 003
- US-A1- 2020 391 678

## Beschreibung

Der hier vorgestellte Ansatz schafft ein Verfahren und eine Vorrichtung zur Erkennung der Gültigkeit eines Fahrzeugparameters gemäß den Hauptansprüchen.

In modernen Verkehrsüberwachungsanlagen tritt oftmals das Problem auf, ein Objekt, welches in einem Überwachungs- oder Erfassungsbereich dieser Verkehrsüberwachungsanlage erkannt wird, hinreichend genau zu klassieren oder als gültigen Fahrzeugparameter zu verstehen, sodass eine automatische Erkennung einer für dieses Objekt geltenden Verkehrsregel schwierig ist. Beispielsweise kann für den Fall einer solchen Verkehrsüberwachungsanlage teilweise nicht sicher erkannt werden, ob ein Fahrzeug in die Fahrzeugklasse der LKW bzw. der Fahrzeuge von mehr als 7,5 t Gesamtgewicht fällt und somit für ein solches Fahrzeug ein anderes Geschwindigkeitslimit gilt, als für andere Kraftfahrzeuge. Auch die Messung von validen Geschwindigkeitsmesswerten ist für die rechtliche Bewertung eines Verkehrsregelverstoßes von zentraler Bedeutung, da anderenfalls dem Fahrer eine Sanktionsmaßnahme rechtlich nicht unzweifelhaft auferlegt werden kann.

Denkbar ist auch die Überwachung einer Nutzung von Fahrspuren durch unterschiedliche Fahrzeugtypen, um hierdurch beispielsweise eine automatische Verkehrsdichtemessung realisieren zu können. Wird dann beispielsweise ein Fahrzeug auf einer Fahrspur als PKW oder LKW erkannt, ist jedoch dieses Fahrzeug tatsächlich ein Motorrad, führte dies zu einer fehlerhaften Berechnung der Verkehrsdichte auf der betreffenden Fahrspur.

Um derartige Probleme zu lösen, wird mit dem vorliegenden Ansatz eine Möglichkeit aufgezeigt, wie die Erkennung der Gültigkeit eines Fahrzeugparameters hinsichtlich seiner Präzision deutlich verbessert und numerisch oder schaltungstechnisch vereinfacht werden kann.

Das Dokument WO 2020/210290 A1 offenbart ein passives Infrarot-Sensieren und Erkennen für Verkehr.

Das Dokument US 2014/257943 A1 offenbart eine Verfolgung von Geschwindigkeitsübertretungen und eine Kontrolle der Nutzung von Parkplätzen durch Kameras.

Das Dokument US 2020/391678 A1 offenbart eine Vorrichtung zur Aufzeichnung von Nummernschildern von Fahrzeugen.

Das Dokument US 2016/293003 A1 offenbart eine Multiverkehrsbeschilderung.

Der hier vorgeschlagene Ansatz schafft ein Verfahren zur Erkennung der Gültigkeit eines Fahrzeugparameters gemäß dem unabhängigen Anspruch 1.

Unter einer Gültigkeit eines Fahrzeugparameters kann vorliegend ein Parameter verstanden werden, der die Qualität des Fahrzeugparameters abbildet. Beispielsweise kann ein Fahrzeugparameter dann als gültig verstanden werden, wenn er definierte Kriterien erfüllt. Ein als gültig erkannter Fahrzeugparameter kann beispielsweise für die Bestimmung von einem oder mehreren anderen Fahrzeugparametern verwendet werden, wobei ein solcher anderer Fahrzeugparameter eine aktuelle Geschwindigkeit oder eine Fahrzeugklasse ist. Unter einem Parameter kann vorliegend eine physikalische Größe des Fahrzeugs, beispielsweise eine Geschwindigkeit, eine räumliche Abmessung, eine Position oder dergleichen oder auch eine von diesen Größen abgeleitete Größe wie beispielsweise eine Beschleunigung zu einem bestimmten Erfassungszeitpunkt verstanden werden. Die erste physikalische Größe kann dabei zeitgleich zu der zweiten physikalischen Größe erfasst worden sein. Unter einem Unterscheidungskriterium kann vorliegend eine ein- oder mehrdimensionale Schwelle verstanden werden, die eine Zuordnung eines Fahrzeugs zu einer Fahrzeugklasse ermöglicht. Unter einer Kombination des ersten und zweiten Parameters kann vorliegend eine Verknüpfung des ersten und zweiten Parameters, beispielsweise in der Form eines Tupels verstanden werden, die die Zuordnung des Fahrzeugs zur entsprechenden Fahrzeugklasse auf der Basis von mehreren unterschiedlichen Parametern ermöglicht.

Der hier vorgestellte Ansatz basiert auf der Erkenntnis, dass durch das Einlesen von mehreren Parametern als erstem und zweiter Parameter (die beispielsweise auf auf unterschiedlichen gemessenen physikalischen Größen basieren können) und gegebenenfalls einer Verarbeitung dieser Parameter sowie einer nachfolgenden Verknüpfung dieser Parameter oder verarbeiten Parameterwerten zu der Kombination sehr gut eine Gültigkeit eines Fahrzeugparameters erkannt werden kann. Wird beispielsweise ein Objekt erkannt, welches eine hohe Geschwindigkeit aufweist (die beispielsweise mittels eines Radarsensors erfasst werden kann) und zugleich eine geringe Fläche aufweist (was beispielsweise aus einem Radarquerschnitt des Objektes aus einem Signal des Radarsensors erkannt werden kann), lässt sich aus diesen Größen als Parametern eine Kombination bilden, die nachstehend hinsichtlich einer Beziehung zu dem Unterscheidungskriterium untersucht werden kann. Fährt beispielsweise ein Motorrad in dem Überwachungsbereich der Verkehrsüberwachungsanlage, werden bei einer schnellen Folge von Abtastungen dieses Motorrad durch den Radarsensor Kombinationen erhalten, bei denen beispielsweise der erste Parameter durch die physikalische Größe der Geschwindigkeit bzw. einer davon abgeleiteten Größe und der zweite Parameter durch die physikalische Größe der Größe des Fahrzeugs gebildet ist und wobei diese Kombinationen in einem bestimmten Bereich eines Auswertungsraums liegen. Folglich wird bei der Erkennung eines Motorrads als Objekt im Überwachungsbereich ein kleines Objekt mit hoher Geschwindigkeit gut erkannt, so dass diesem Objekt relativ zuverlässig ein Fahrzeugparameter als Fahrzeugklasse "Motorrad" zugeordnet werden kann. Diese Fahrzeugklasse als Fahrzeug kann dann beispielsweise dadurch identifiziert werden, dass die Kombination von Parametern das Unterscheidungskriterium erfüllt, beispielsweise innerhalb eines abgegrenzten Bereichs von Kombinationswerten liegt, so dass in diesem Fall dem Fahrzeug die bestimmte Fahrzeugklasse, hier beispielsweise die Fahrzeugklasse Motorräder, sehr zuverlässig zugeordnet werden kann.

Alternativ ist es beispielsweise auch denkbar, dass als erster Parameter ein Abstand des Objekts von dem Sensor und der zweite Parameter eine Größe des Objekts, beispielsweise anhand eines Radarquerschnitts, verwendet wird, um nun eine Geschwindigkeit dieses Objekts anhand einer Kombination des ersten Parameters und des zweiten Parameters als gültig zu erkennen. Ist beispielsweise ein Abstand des Objekts von dem Sensor als klein und zugleich eine Größe des Objekts als sehr groß erkannt, kann davon ausgegangen werden, dass eine Geschwindigkeitsmessung sehr präzise ist und eine geringe Fehleranfälligkeit aufweist, da eventuell Reflexionen von Radarstrahlen von anderen Objekten für die Bewertung der erfassten Geschwindigkeit des beobachteten Objektes weniger ins Gewicht fallen. Auf diese Weise kann somit auch der Fahrzeugparameter "Geschwindigkeit" durch die Kombination von zwei anderen Parametern verifiziert bzw. als gültig erkannt bzw. zugeordnet werden.

Der hier vorgeschlagene Ansatz bietet den Vorteil, durch eine sehr günstige und technisch einfach umzusetzende Verknüpfung von unterschiedlichen Parametern mit einer nachfolgenden Untersuchung dieser Verknüpfung bzw. Kombination eine sehr präzise Erkennung der Gültigkeit eines Fahrzeugparameters ermöglicht wird. Zugleich ergeben sich nachfolgend noch weiter beschriebene Optimierungsmöglichkeiten, die eine weitere Erhöhung der Präzision bei einem unwesentlich gesteigerten numerischen oder schaltungstechnischen Aufwand erreichen lassen.

Besonders vorteilhaft ist eine Ausführungsform des hier vorgeschlagenen Ansatzes, bei dem im Schritt des Einlesens ein Unterscheidungskriterium eingelesen wird, das einen Bereich von Tupeln abgrenzt, die durch Kombinationen der ersten und zweiten Parameter als Elementendes Tupels gebildet wird, wobei im Schritt des Zuordnens der Fahrzeugparameter dann als gültiger Fahrzeugparameter zugeordnet wird, wenn die Kombination des ersten und zweiten Parameters innerhalb dieses Bereichs liegt. Unter einem Bereich kann beispielsweise ein zweidimensionaler Teilbereich in einer durch den ersten und zweiten Parameter aufgespannten Ebene verstanden werden. Unter einem Element eines Tupels kann vorliegend eine Komponente dieses Tupels verstanden werden, wobei dieses Tupel eine Kombination eines konkreten ersten Parameters mit mindestens einem konkreten zweiten Parameter darstellt oder abbildet. Eine solche Ausführungsform bietet den Vorteil, durch die Definition oder Verwendung dieses Bereiches als Unterscheidungskriterium eine technisch sehr einfach umzusetzende Möglichkeit zu eröffnen, beispielsweise in einer in der durch den ersten und zweiten Parameter aufgespannten Ebene zu erkennen, dass bestimmte Kombinationen von ersten und zweiten Parametern innerhalb des definierten Bereiches liegen und dann das Tupel als ein gültiger Fahrzeugparameter zugeordnet wird. Auf diese Weise braucht lediglich überprüft zu werden, ob Kombinationen von ersten und zweiten Parametern in diesem Bereich auftreten.

Günstig ist ferner eine Ausführungsform des hier vorgeschlagenen Ansatzes, bei der im Schritt des Einlesens ein Unterscheidungskriterium eingelesen wird, bei dem das Unterscheidungskriterium zumindest einen von dem Bereich unterschiedlichen und/oder von dem Bereich getrennt angeordneten Teilbereich darstellt. Eine solche Ausführungsform des hier vorgeschlagenen Ansatzes bietet den Vorteil, unterschiedliche Aspekte oder beispielsweise Signalreflexionen auch zur Identifizierung eines gültigen Fahrzeugparameters verwenden können, die nicht in einem einzigen zusammenhängenden Bereich als Unterscheidungskriterium für die Zuordnung des Fahrzeugparameters als gültigem Fahrzeugparameter resultieren.

Speziell kann gemäß einer Ausführungsform des hier vorgeschlagenen Ansatzes im Schritt des Einlesens als erster oder zweiter Parameter je eine Geschwindigkeit, eine Position, eine erkannte Größe des Fahrzeugs, eine Position oder ein eine Qualität einer physikalischen Messung repräsentierender Parameter zu einem bestimmten Zeitpunkt oder eine aus einer dieser physikalischen Größen gebildeter Parameter eingelesen werden. Eine solche Ausführungsform des hier vorgeschlagenen Ansatzes bietet den Vorteil der Verwendung von einerseits sehr gut erfassbaren Messgrößen als Parameter als auch andererseits der Verwendung von Parametern, die Kombinationen ermöglichen, mit denen eine hohe Präzision bei der Zuordnung des Fahrzeugparameters als gültigem Fahrzeugparameter erreicht werden kann.

Besonders günstig ist eine Ausführungsform des vorliegenden Ansatzes, bei der Fahrzeugparameter als nicht gültiger Fahrzeugparameter erkannt wird, wenn die Kombination des ersten und zweiten Parameters das Unterscheidungskriterium nicht erfüllt. Eine solche Ausführungsform bietet den Vorteil, bei unklaren Ausprägungen der Parameter eine eventuell falsche Zuordnung des Fahrzeugparameters als gültigem Fahrzeugparameter möglichst gut vermeiden zu können.

Erfindungsgemäß wird im Schritt des Einlesens ein weiteres Unterscheidungskriterium eingelesen, das einen sich von dem Bereich zumindest teilweise unterscheidenden weiteren Bereich von Tupeln abgrenzt, die durch Kombinationen der ersten und zweiten Parameter als Objekten gebildet wird. Dabei wird im Schritt des Zuordnens der Fahrzeugparameter dann als gültiger Fahrzeugparameter zugeordnet, wenn die Kombination der ersten und zweiten Parameter innerhalb des Bereichs und nicht innerhalb des weiteren Bereichs liegt. Eine solche Ausführungsform des hier vorgeschlagenen Ansatzes bietet den Vorteil, dass beispielsweise ein oder mehrere bestimmte Bereiche (die hier als weitere Bereiche bezeichnet werden) der Kombinationen von ersten und zweiten Parametern als möglicherweise auf stark fehlerbehafteten Messwerten bzw. Parametern basierend betrachtet werden können, so dass bei einem Vorliegen einer Kombination von Parametern in diesem weiteren Bereich eine Zuordnung des Fahrzeugparameters als gültigem Fahrzeugparameter möglichst vermieden werden sollte. Auf diese Weise kann ebenfalls eine fehlerhafte Zuordnung des Fahrzeugparameters als gültigem Fahrzeugparameter möglichst gut vermieden werden.

Ferner kann gemäß einer Ausführungsform des hier vorgestellten Ansatzes einen Schritt des Ermittelns eine Eigenschaft des Fahrzeugs unter Verwendung eines Fahrzeugparameters, der als gültiger Fahrzeugparameter zugeordnet wurde, insbesondere wobei die ermittelte Eigenschaft des Fahrzeugs eine Geschwindigkeit des Fahrzeugs oder eine Fahrzeugklasse repräsentiert, in die das Fahrzeug eingeteilt wurde. Unter einer Fahrzeugklasse kann vorliegend ein Typ oder eine Gattung von Fahrzeugen verstanden werden, beispielsweise die Klasse der PKW, LKW, Motorrädern, Arbeitsmaschinen, oder dergleichen. Eine solche Ausführungsform bietet den Vorteil, Fahrzeuge speziell aus diesem Fahrzeugklassen sehr präzise klassieren zu können, um speziell die Fahrzeuge aus diesen schwer zu erkennenden Fahrzeugklassen möglichst präzise identifizieren zu können. Auch kann beispielsweise die Geschwindigkeit des Fahrzeugs mit einer solchen Maßnahme möglichst präzise identifiziert werden.

Um beispielsweise auch einen Bewegungsweg der Fahrzeuge in den Überwachungsbereich mit berücksichtigen zu können, kann auch eine zeitliche Komponente der Parameter für die Bildung der entsprechenden Kombination berücksichtigt werden. Dementsprechend können gemäß einer Ausführungsform des hier vorgeschlagenen Ansatzes auch im Schritt des Zuordnens Kombinationen mehrerer, zu unterschiedlichen Zeitpunkten erfassten erster Parameter und mehrerer, zu unterschiedlichen Zeitpunkten erfassten zweiter Parameter verwendet werden. Eine solche Ausführungsform des hier vorgeschlagenen Ansatzes bietet den Vorteil, durch die Berücksichtigung eines zeitlichen Verlaufs der Parameter eine noch größere Präzision bei der Zuordnung des Fahrzeugparameters als gültigem Fahrzeugparameter zu ermöglichen.

Um den hier vorgeschlagenen Ansatz realisieren zu können, wird gemäß einer Ausführungsform ferner ein Verfahren zum Bilden eines Unterscheidungskriteriums zur Erkennung der Gültigkeit eines Fahrzeugparameters gemäß dem unabhängigen Anspruch 8 vorgestellt.

Unter einer Auftrittshäufigkeit kann eine Anzahl von Ausprägungen der betreffenden Kombination aus einem konkreten ersten und einem konkreten zweiten Parameter verstanden werden.

Eine solche Ausführungsform bietet den Vorteil, dass nun durch einen Lernalgorithmus das Unterscheidungskriterium ermittelt werden kann, so dass dieses Unterscheidungskriterium in einer hier beschriebenen Variante eines Verfahrens technisch einfach eingesetzt werden kann und dennoch präzise Ergebnisse der Zuordnung eines Fahrzeugs zu einer Fahrzeugklasse liefert.

Besonders vorteilhaft ist eine Ausführungsform des hier vorgeschlagenen Ansatzes, bei der im Schritt des Einlesens weitere erste Parametern und weitere zweite Parametern eingelesen werden, wobei die weiteren ersten Parameter eine weitere erste physikalische Größe oder eine von der weiteren ersten physikalischen Größe abgeleitete Größe eines nicht-gültigen Fahrzeugparameters des Fahrzeugs und die weiteren zweiten Parameter eine weitere zweite physikalische Größe oder eine von der weiteren zweiten physikalischen Größe abgeleitete Größe eines nicht-gültigen Fahrzeugparameters des Fahrzeugs eingelesen werden und wobei im Schritt des Ermittelns, ein Ausschlussbereich von Kombinationen des weiteren ersten und weiteren zweiten Parameters ermittelt wird, deren Auftrittshäufigkeit über einem Schwellwert liegen, insbesondere wobei ein Sicherheitsbereich ermittelt wird, um den der Ausschlussbereich vergrößert wird, um zum Bilden des Unterscheidungskriteriums einen weiteren Bereich zu ermitteln. Durch die Verwendung eines solchen Ausschlussbereichs oder zusätzlich noch des Sicherheitsbereichs kann verhindert werden, das beispielsweise durch geringe Messfehler bei der Bestimmung der entsprechenden Parameter und der nachfolgenden Bildung der jeweiligen Kombination ein Fahrzeugparameter nicht als ein gültiger Fahrzeugparameter eingeordnet wird. Durch die Verwendung dieses Sicherheitsbereichs, durch den der Bereich beispielsweise um 10 % vergrößert wird, lässt sich somit eine Robustheit der Zuordnung des Fahrzeugparameters als gültigem Fahrzeugparameter erhöhen.

Auch kann gemäß einer Ausführungsform des hier vorgeschlagenen Ansatzes im Schritt des Einlesens als erster oder zweiter Parameter je eine Geschwindigkeit, eine Position, eine erkannte Größe des Fahrzeugs oder ein eine Qualität einer physikalischen Messung repräsentierender Parameter zu einem bestimmten Zeitpunkt oder eine aus einer dieser physikalischen Größen gebildeter Parameter eingelesen werden. Auch eine solche Ausführungsform ermöglicht das präzise und einfacher Bestimmen des Fahrzeugparameters als gültigem Fahrzeugparameter für das zu untersuchende Fahrzeug.

Um einen möglichst großen Trainingssatz von Daten zum Trainieren des Algorithmus zum Bilden des Unterscheidungskriteriums zu erhalten, kann gemäß einer vorteilhaften Ausführungsform des hier vorgeschlagenen Ansatzes im Schritt des Ermittelns eine Auftrittshäufigkeit von Kombinationen mehrerer, zu unterschiedlichen Zeitpunkten erfassten erster Parameter und mehrerer, zu unterschiedlichen Zeitpunkten erfassten zweiter Parameter verwendet werden, um den Bereich als Teil des Unterscheidungskriteriums zu bilden.

Diese Verfahren können beispielsweise in Software oder Hardware oder in einer Mischform aus Software und Hardware beispielsweise in einem Steuergerät oder einer Vorrichtung implementiert sein.

Der hier vorgestellte Ansatz schafft ferner eine Vorrichtung gemäß dem unabhängigen Anspruch 12. Auch durch diese Ausführungsvariante der Erfindung in Form einer Vorrichtung kann die der Erfindung zugrundeliegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung einer Straße, wobei sich auf dieser Straße ein Fahrzeug auf einer der Fahrbahnen dieser Straße befindet, und ein Parameter dieses Fahrzeugs (beispielsweise die Fahrzeugklasse) mithilfe einer entsprechend ausgebildeten Vorrichtung zur Erkennung der Gültigkeit eines Fahrzeugparameters des Fahrzeugs bestimmt oder validiert werden soll;
Fig. 2 eine schematische Darstellung eines Ausführungsbeispiels einer Vorgehensweise zur Erkennung der Gültigkeit eines Fahrzeugparameters unter Verwendung des Unterscheidungskriteriums;
Fig. 3 eine schematische Darstellung der Vorgehensweise eines Ausführungsbeispiels eines Verfahrens zum Bilden des Unterscheidungskriteriums zur Erkennung der Gültigkeit eines Fahrzeugparameters eines Fahrzeugs;
Fig. 4 ein Blockschaltbild eines Ausführungsbeispiels einer Vorrichtung zum Bilden des Unterscheidungskriteriums zur Erkennung der Gültigkeit eines Fahrzeugparameters eines Fahrzeugs;
Fig. 5 ein Ablaufdiagramm eines Ausführungsbeispiels eines Verfahrens zur Erkennung der Gültigkeit eines Fahrzeugparameters unter Verwendung des Unterscheidungskriteriums; und
Fig. 6 ein Ablaufdiagramm eines Ausführungsbeispiels eines Verfahrens zum Bilden des Unterscheidungskriteriums zur Erkennung der Gültigkeit eines Fahrzeugparameters eines Fahrzeugs.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

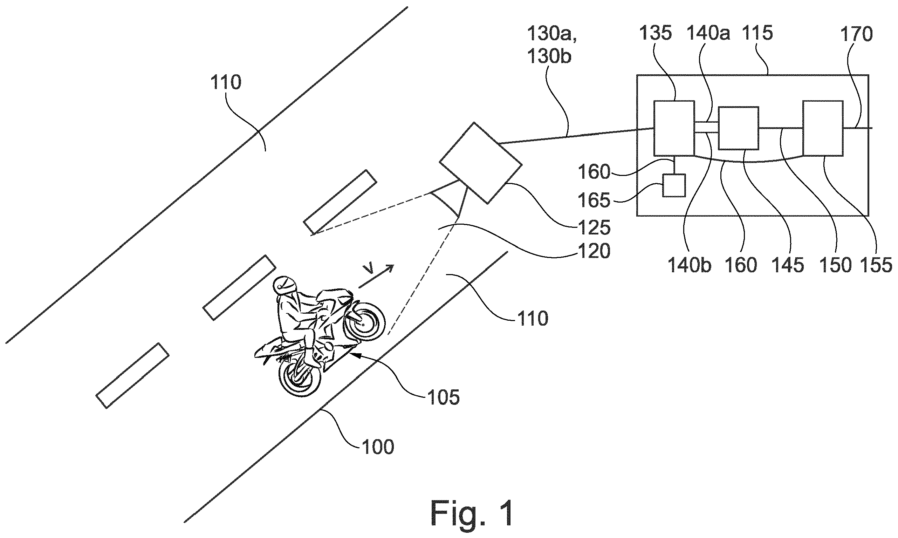

Figur 1 zeigt eine schematische Darstellung einer Straße 100, wobei sich auf dieser Straße 100 ein Fahrzeug 105, hier ein Motorrad, auf einer der Fahrbahnen 110 dieser Straße 100 befindet, und die Klasse dieses Fahrzeugs 105 mithilfe einer entsprechenden Vorrichtung 115 bestimmt werden soll. Hierzu wird zunächst ermittelt, ob die Fahrzeugklasse als erkannter Fahrzeugparameter gültig ist, also mit hinreichender Präzision erkannt werden kann. Beispielsweise wird das Fahrzeug 105 in einen Überwachungsbereich bzw. Erfassungsbereich 120 eines Sensors 125 erfasst und mehrere physikalische Größen 130a und 130b gemessen. Beispielsweise kann der Sensor 125 als ein Radarsensor ausgebildet sein, der als eine erste physikalische Größe 130a eine Geschwindigkeit v des Fahrzeugs 105 ermittelt und beispielsweise aus der Stärke bzw. Intensität eines von dem Fahrzeug 105 reflektierten Signals einen Radarquerschnitt bzw. eine Größe des Fahrzeugs 105 ermittelt und diese als zweite physikalische Größe 130b ausgibt. Denkbar ist jedoch auch, dass dass der Sensor 125 noch weitere physikalische Größen wie beispielsweise eine Position des Fahrzeugs 105 auf der Fahrbahn 110 ermittelt oder dass der Sensor 125 noch einen zusätzlichen, in der Figur 1 nicht dargestellten Teilsensor aufweist, der eine physikalische Größe des Fahrzeugs 105 erfasst, die beispielsweise nicht unter Auswertung eines Radarstrahlsignals ermittelt wird. Beispielsweise kann ein solcher Teilsensor eine Kamera zur optischen Auswertung des Fahrzeugs 105 im Erfassungsbereich 120 darstellen.

In der Vorrichtung 115 zur Erkennung der Gültigkeit eines Fahrzeugparameters, der hier als die Fahrzeugklasse des Fahrzeugs 105 zu erkennen ist, werden zunächst in einer Einleseschnittstelle 135 die physikalischen Größen 130a und 130b eingelesen. Hieran anschließend wird die erste physikalische Größe 130a oder ein davon abgeleiteter Wert (beispielsweise eine Beschleunigung, einen die erste physikalische Größe eine Geschwindigkeit repräsentiert, welche nach der Zeit differenziert wird) als erster Parameter 140a ausgegebenen. Die zweite physikalische Größe 130b oder ein davon abgeleiteter Wert wird beispielsweise als zweiter Parameter 140b ausgegeben. In einer Verknüpfungseinheit 145 wird nun beispielsweise eine Kombination 150 des ersten Parameters 140a und des zweiten Parameters 140b als Tupel mit dem ersten Parameter 140a als erstem Objekt und dem zweiten Parameter 140b als zweitem Objekt bestimmt. Diese Kombination 150, die nun ein zeitgleiches Auftreten eines konkreten ersten Parameters 140a mit einem konkreten zweiten Parameter 140b repräsentiert, wird nun in einer Zuordnungseinheit 155 weiterverarbeitet.

Gemäß der vorstehend beschriebenen Vorgehensweise wird nun in der Zuordnungseinheit 155 ein Unterscheidungskriterium 160 aus der Einleseschnittstelle 135 bezogen, wobei die Einleseschnittstelle 135 dieses Unterscheidungskriterium selbst wieder aus einem Speicher 165 ausliest. Dieses Unterscheidungskriterium 160 wird dann beispielsweise entsprechend der nachstehend noch näher beschriebenen Vorgehensweise verwendet, um eine Gültigkeit des erkannten Fahrzeugparameters, hier der Fahrzeugklasse des in dem Erfassungsbereich 120 erfassten Fahrzeugs 105, im vorliegenden Fall beispielsweise die Fahrzeugklasse "Motorrad", diesem Fahrzeug 105 zuzuweisen und als entsprechendes Fahrzeugparametersignal 170 für eine nachfolgende Verarbeitung in einer in der Figur 1 nicht dargestellten Vorrichtung ausgegeben.

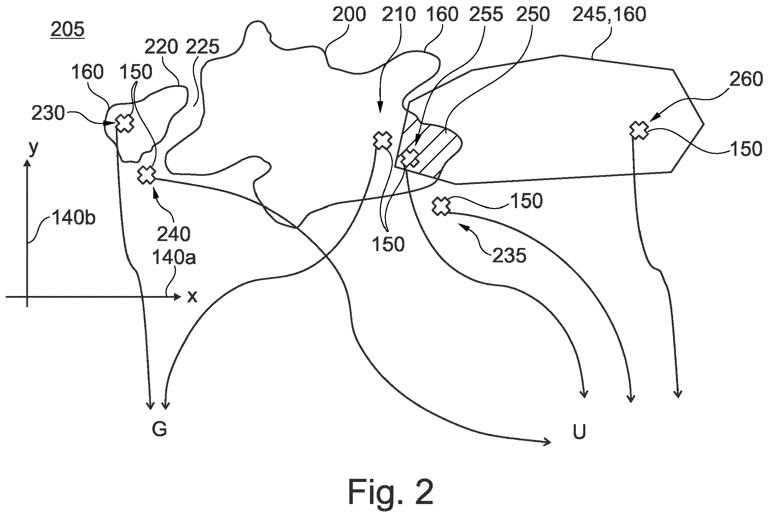

Figur 2 zeigt eine schematische Darstellung der Vorgehensweise zur Erkennung der Gültigkeit eines Fahrzeugparameters (wie hier der Fahrzeugklasse) unter Verwendung des Unterscheidungskriteriums 160. Hierbei ist in der Figur 2 eine Ebene dargestellt, die entsprechend der Darstellung des Koordinatensystems auf der linken Seite in der Dimension des ersten Parameters 140a (x) und des zweiten Parameters 140b (y) aufgespannt ist ist. Die einzelnen möglichen Kombinationen 150 aus je einem ersten Parameter 140a und einem zweiten Parameter 140b sind in der Darstellung aus Figur 2 durch Kreuzchen dargestellt, die die betreffende Kombination 150 repräsentieren. Ferner ist in der Figur 2 noch die Ausführung des Unterscheidungskriterium 160 in der Form eines umgrenzten Bereichs 200 der Ebene 205 als Teilbereich des Unterscheidungskriteriums 160 dargestellt, der einen bestimmten Bereich von Kombinationen 150 des ersten Parameters 140a und des zweiten Parameters 140b umschließt. Eine Kombination 150, wie beispielsweise die Kombination 150 an der Position 210 liegt somit innerhalb dieses Bereichs 200 und wird als Kombination 150 interpretiert, der die Gültigkeit des Fahrzeugparameters zugeordnet werden kann, für die das Unterscheidungskriterium 160 vorgesehen ist. Für die Erkennung von der Kombination 150 im Bereich G der validen, gültigen Werte (bzw. im nachfolgend näher beschriebenen Bereich 200 oder 220) sollte auch erfüllt sein, dass die Kombination 150 nicht in dem ebenfalls nachfolgend noch näher beschriebenen Bereich 245 liegt.

Auch kann ein Teilbereich 220 des Unterscheidungskriterium 160 vorgesehen sein, der einen Bereich von Kombinationen 150 des ersten Parameters 140a und des zweiten Parameters 140b von anderen Kombinationen 150 dieser Parameter abgegrenzt, wobei der Bereich 200 und der Teilbereich 220 voneinander abgetrennt sind, beispielsweise durch einen Kanal 225 von Kombinationen von ersten Parametern 140a und zweiten Parametern 140b, die nicht der jeweils betreffenden Fahrzeugklasse zuzuordnen sind. Somit kann beispielsweise eine Kombination 150 eines ersten Parameters 140a und eines zweiten Parameters 140b an der Position 230 auftreten, wobei diese Kombination 150 bzw. das Fahrzeug 105, welches physikalische Größen 130 liefert, die zu dieser Kombination 150 an der Stelle 230 führen, als Fahrzeug 105 der durch das verwendete Unterscheidungskriterium 160 repräsentierten Fahrzeugklasse gewertet werden.

Diejenigen Kombinationen 150, die zu einer gültigen Messung G bzw. einer gültigen Erkennung des Fahrzeugparameters des Fahrzeugs, beispielsweise der Einordnung in der betreffenden Fahrzeugklasse, führen können, sind somit diejenigen Kombinationen 150, die an den Positionen 210 und 230 in der durch den ersten Parameter 140a und den zweiten Parameter 140b aufgespannten Ebene 205 liegen. Dabei sollten diejenigen Kombinationen 150 nicht im Bereich 245 liegen.

Treten jedoch Kombinationen 150 des ersten Parameters 140a und des zweiten Parameters 140b beispielsweise an den Positionen 235 und 240 auf, kann durch die Verwendung des Unterscheidungskriterium 160 erkannt werden, dass diese Kombinationen 150 außerhalb des Bereichs 200 bzw. des Teilbereichs 220 liegen, sodass diese Kombinationen 150 an der Position 235 und der Position 240 als ungültige Messung U bzw. einer ungültigen Erkennung der Fahrzeugklasse als Fahrzeugparameter erkannt werden. Dies kann beispielsweise derart interpretiert werden, dass die Parameter 140a oder 140b bzw. die diesen Parametern zu Grunde liegenden gemessenen physikalischen Größen nicht mit hinreichender Präzision gemessen wurden oder das Fahrzeug 105 nicht eindeutig in eine Fahrzeugklasse als Fahrzeugparameter eingeteilt werden kann, sodass eine Zuordnung der Fahrzeugklasse als Fahrzeugparameters unter Verwendung des Unterscheidungskriterium 160 nicht ausreichend präzise wäre und damit verworfen wird, also als nicht gültig interpretiert wird.

Denkbar ist ferner, dass ein weiterer Bereich 245 definiert ist, der einen Bereich von Kombinationen 150 des ersten Parameters 140a und des zweiten Parameters 140b bezeichnet, welche die darin liegenden Kombinationen 150 definitiv nicht der betreffenden Fahrzeugklasse als gültigem Fahrzeugparameter für das Fahrzeug 105 zugeordnet werden sollen. Beispielsweise kann dieser weitere Bereich 245 Kombinationen 150 repräsentieren, die explizit ein Fahrzeug 105 beschreiben, das nicht der betreffenden Fahrzeugklasse als gültigem Fahrzeugparameter zuzuordnen ist. In einem Spezialfall kann beispielsweise auch der weitere Bereich 245 den Bereich 200 in einem Überlappungsbereich 250 überlappen, sodass eine Kombination 150 an der Position 255 explizit nicht der betreffenden Fahrzeugklasse als gültigem Fahrzeugparameter zugeordnet werden soll, obwohl diese Kombination 150 an der Position 255 innerhalb des Bereichs 200 liegt. Diese Kombination 150 an der Position 255 soll somit als ungültige Messung U betrachtet werden. Auch eine Kombination 150 an der Position 260 soll als ungültige Messung U betrachtet werden, da sie innerhalb des weiteren Bereichs 245 liegt. Der Bereich 245 allein reicht beispielsweise aus, um das Ergebnis als im Bereich U der ungültigen Kombinationen zu erkennen. Umgekehrt reicht eine Lage der Kombination 150 in Bereichen 200 bzw. 220 nicht aus, um diese Kombination als im gültigen Wertebereich G (also im Bereich 200 und/oder 220 liegend) zu erkennen; es sollte hier auch gelten, dass die Kombination 150 nicht den Bereich 245 berührt. Vorteilhaft ist hierbei, dass der Bereich 245 vorhanden sein sollte. Wenn die Option des Nicht-Vorhandenseins mitberücksichtigt werden soll, dann sollten jeweils sinngemäß definiert werden: die Kombination 150 liegt im unkritischen, also gültigen Bereich G, wenn sie in dem Bereich 200 bzw. 220 liegt und der Bereich 245 nicht existiert; andernfalls bei Existenz des Bereichs 245, wenn die Kombination 150 in dem Bereich 200 bzw. 220 liegt und nicht in dem Bereich 245 liegt.

Eine solche Vorgehensweise zur Erkennung der Fahrzeugklasse des Fahrzeugs 105 als gültigem Fahrzeugparameter bietet einen besonderen Vorteil, da mit technisch einfachen Mitteln lediglich eine Kombination 150 des ersten Parameters 140a und zweiten Parameters 140b gebildet werden braucht und überprüft werden kann, ob diese Kombination 150 innerhalb des Bereichs 200 bzw. des Teilbereichs 220 (und gegebenenfalls nicht innerhalb des weiteren Bereichs 245) liegt. Auf diese Weise lässt sich mit technisch sehr einfachen Mitteln sehr schnell eine präzise Klassierung des Fahrzeugs 105 im Erfassungsbereich 120 des Sensors 125 erreichen, die dann auch als gültiger Fahrzeugparameter gewertet werden kann.

Wie aus den vorangegangenen Ausführungen bereits zu entnehmen ist, spielt die Verwendung des Unterscheidungskriterium 160 für die Umsetzung des hier vorgeschlagenen Ansatzes eine wichtige Rolle. Aus diesem Grund wird nachfolgend eine Möglichkeit beschrieben, wie das Unterscheidungskriterium 160 ermittelt werden kann, damit es für die Ausführung der Erkennung der Fahrzeugklasse des Fahrzeugs in dem Speicher 165 abgelegt und dann in der Zuordnungseinheit 155 gemäß der Darstellung aus der Figur 1 verwendet werden kann.

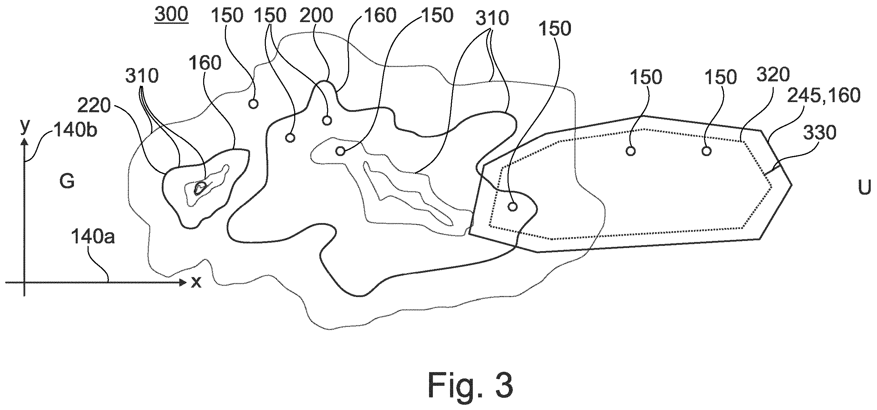

Figur 3 zeigt eine schematische Darstellung der Vorgehensweise eines Verfahrens zur zum Bilden des Unterscheidungskriteriums zur Erkennung einer Gültigkeit eines Fahrzeugparameters. Hierbei ist in der Figur 3 wiederum eine Ebene 300 (die im Wesentlichen der Ebene 205 aus Fig. 2 entspricht, jedoch auf ein anderes bzw. erweitertes Ausführungsbeispiel bezogen ist) dargestellt, die durch die Dimension des ersten Parameter 140a und den zweiten Parameter 140b aufgespannt ist. In einer Trainingsphase bzw. Lernphase werden nun verschiedene physikalische Größen eines Fahrzeugs einem bekannten zur Erkennung eines gültigen Fahrzeugparameters wie beispielsweise einer als gültig erkannten Fahrzeugklasse eingelesen und hieraus erste Parameter 140a und zweite Parameter 140b extrahiert, die zu den Kombinationen 150 zusammengefasst werden. Diese entsprechenden Kombinationen 150 sind in der Ebene 300 nun als Kreise dargestellt. In der Ebene 300 werden nun die Auftrittshäufigkeiten der Kombinationen 150, die in der Figur 3 durch Kreise dargestellt sind, eingetragen, sodass sich diese Auftrittshäufigkeiten der betreffenden Kombinationen 150 quasi in eine dritte Dimension aus der Zeichenebene heraus abbilden lassen. Entsprechend der Darstellung aus einer Kartografie können nun quasi Höhenlinien 310 bestimmt werden, die Positionen miteinander verbinden, an welchen die Kombinationen 150 eine gleiche Auftrittshäufigkeit aufweisen. Wird nun beispielsweise ein Schwellwert für die Auftrittshäufigkeit festgelegt, ab welchem die Kombinationen 150 ein Fahrzeug 105 repräsentieren, dass der entsprechende Fahrzeugparameter als gültig erkannt werden soll und als gültiger Fahrzeugparameter zugeordnet werden soll (der auch hier der Fahrzeugklasse entspricht, von denen die physikalischen Größen des Fahrzeugs für die Trainingsphase bzw. Lernphase ermittelt wurden), lässt sich eine solche Höhenlinie 310 ermitteln, die als Unterscheidungskriterium 160 bzw. als Bereich 200 bzw. Teilbereich 220 eine nachfolgende Erkennung der Fahrzeugklasse in der Vorrichtung 115 verwendet werden kann. Diejenigen Kombinationen 150, die innerhalb des Bereichs 200 bzw. des Teilbereichs 220 liegen, weisen dabei eine größere Auftrittswahrscheinlichkeit bzw. Auftrittshäufigkeit auf, als Kombinationen 150, die außerhalb des Bereichs 200 bzw. Teilbereichs 220 liegen. Zugleich kann wiederum ein Ausschlussbereich 320 bzw. der weitere Bereich 245 als eine Höhenlinie von Auftrittshäufigkeiten oder durch Bildung der konvexen Hülle bei wenigen Datenbeispielen ermittelt werden, die ein Areal von Kombinationen 150 umschließt, die nicht zu einer Zuordnung als gültig bewerteter Fahrzeugparameter führen soll. Insbesondere die Ermittlung des Bereiches 320 als konvexe Hülle erlaubt eine transparente, nachvollziehbare und leicht parametrisierbare Absicherung des Verfahrens, wenn gleichzeitig
- nur wenige Datenbeispiele zum Training vorliegen und
- die Klasse U eine besonders große Kritikalität im Rahmen der zugrundeliegenden Applikation des Verfahrens aufweist.

Um hierbei sicherzugehen, dass keine fehlerhaften Messwerte zu Kombinationen 150 führen, die knapp außerhalb des Bereichs oder Ausschlussbereichs 320liegen, kann die Grenze des Bereichs 320um einen Sicherheitsbereich 330 um den Ausschlussbereich 320 herum vergrößert werden. In der Darstellung aus der Figur 3 ist hierbei aus darstellungstechnischen Gründen lediglich der Sicherheitsbereich 330 um den Ausschlussbereich 320 herum dargestellt, wobei selbstverständlich auch der Bereich 200 durch das Vorsehen eines solchen Sicherheitsbereichs entsprechend abgesichert bzw. vergrößert werden kann. Hierdurch lässt sich weitgehend sicherstellen, dass alle Kombinationen 150 in der Nähe des Bereichs 200 sicher durch die Wahl der Bereichsgrenzen des Bereichs 200 bzw. Ausschlussbereichs 320 in den Grenzen des weiteren Bereichs 245 liegen.

Das Bilden des Unterscheidungskriterium 160 zur Erkennung einer Fahrzeugklasse eines Fahrzeugs kann hierbei außerhalb der in der Figur 1 dargestellten Vorrichtung 115, beispielsweise in einer Laborumgebung erfolgen. Denkbar ist jedoch auch, dass das Verfahren zum Bilden als kontinuierliche Lernfunktionen auch vor Ort in der Vorrichtung 115 ausgeführt wird.

Denkbar ist ferner, dass ein Transfer der Vorgehensweise von 2D auf n Dimensionen erfolgen kann. Die vorangegangenen Ausführungen beziehen sich auf jeweilige Kombinationen 150, also 2-Tupel von Werten. Es ist auch eine Ausführungsvariante mit n-Tupeln von Werten vorstellbar. Es werden also jeweils Kombinationen von n Einzelwerten je Fahrzeug betrachtet. Der Bereich der gültigen Messungen wird zum Beispiel durch eine n-dimensionale Dichteschätzung und einer zugehörigen Iso-Oberfläche ermittelt. Der Bereich der ungültigen Messungen ergibt sich zum Beispiel als n-dimensionale konvexe Hülle und Sicherheitsabstand.

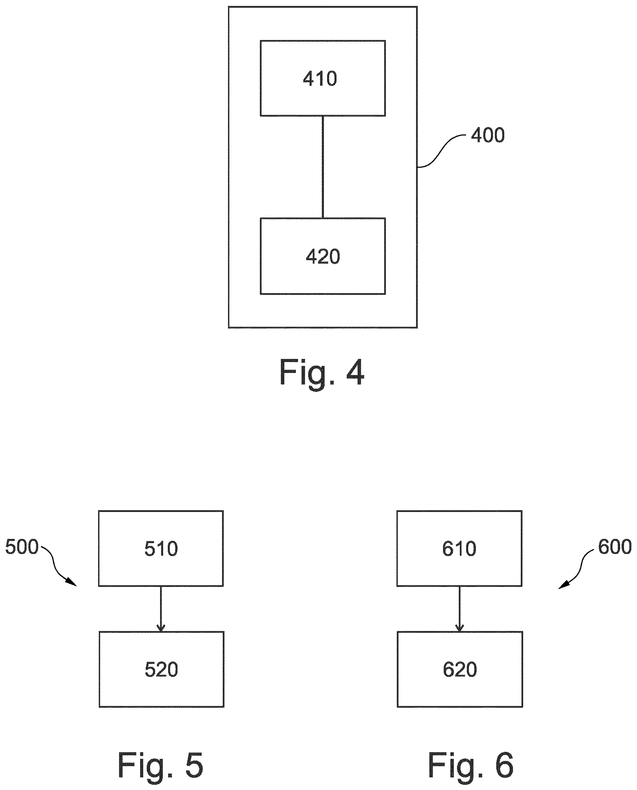

Figur 4 zeigt ein Blockschaltbild einer Vorrichtung 400 zum Bilden eines Unterscheidungskriteriums zur Erkennung der Gültigkeit eines Fahrzeugparameters, wobei die Vorrichtung 400 eine Einleseschnittstelle 410 zum Einlesen von ersten Parametern und zweiten Parametern aufweist, wobei die ersten Parameter eine erste physikalische Größe oder eine von der ersten physikalischen Größe abgeleitete Größe einen gültigen Fahrzeugparameter des Fahrzeugs und die zweiten Parameter eine zweite physikalische Größe oder eine von der zweiten physikalischen Größe abgeleitete Größe einen gültigen Fahrzeugparameter des Fahrzeugs repräsentiert. Ferner umfasst die Vorrichtung 400 eine Einheit 420 zum Ermitteln des Unterscheidungskriteriums 160 als mindestens demjenigen Bereich (200) von Kombinationen des ersten und zweiten Parameters, deren Auftrittshäufigkeit über einem Schwellwert liegen, um das Unterscheidungskriterium zu bilden.

Figur 5 zeigt ein Ablaufdiagramm eines Verfahrens 500 zur Erkennung der Gültigkeit eines Fahrzeugparameters, wobei das Verfahren 500 einen Schritt 510 des Einlesens von zumindest einem ersten Parameter und zumindest einem zweiten Parameter, wobei der erste Parameter eine erste physikalische Größe des Fahrzeugs oder eine von der ersten physikalischen Größe abgeleitete Größe und der zweite Parameter eine zweite physikalische Größe des Fahrzeugs oder eine von der zweiten physikalischen Größe abgeleitete Größe repräsentiert, wobei ferner ein Unterscheidungskriterium zur Erkennung der Gültigkeit des Fahrzeugparameters des Fahrzeugs anhand einer Kombination des ersten und zweiten Parameters eingelesen wird. Weiterhin umfasst das Verfahren 500 einen Schritt 520 des Zuordnens des Fahrzeugparameters als gültigem Fahrzeugparameter, wenn eine Kombination des ersten und zweiten Parameters das Unterscheidungskriterium erfüllt.

Figur 6 zeigt ein Ablaufdiagramm eines Verfahrens 600 zum Bilden eines Unterscheidungskriteriums zur Erkennung der Gültigkeit eines Fahrzeugparameters. Das Verfahren 600 weist einen Schritt 610 des Einlesens von ersten Parametern und zweiten Parametern, wobei die ersten Parameter eine erste physikalische Größe oder eine von der ersten physikalischen Größe abgeleitete Größe einen gültigen Fahrzeugparameter des Fahrzeugs und die zweiten Parameter eine zweite physikalische Größe (130b) oder eine von der zweiten physikalischen Größe abgeleitete Größe einen gültigen Fahrzeugparameter des Fahrzeugs repräsentiert. Weiterhin umfasst das Verfahren 600 einen Schritt 620 des Ermittelns des Unterscheidungskriteriums als demjenigen Bereich von Kombinationen des ersten und zweiten Parameters, deren Auftrittshäufigkeit über einem Schwellwert liegen, um das Unterscheidungskriterium zu bilden.

Zusammenfassend ist anzumerken, dass eine wichtige Grundlage des hier vorgestellten Ansatzes die Lösung eines Zweiklassenproblems abbildet. Merkmale beider Klassen liegen vor in Form von Vektoren eine Dimension größer 1. Die beiden Klassen unterscheiden sich in ihrer Kritikalität in dem Sinne, dass Vertauschungen in der einen Richtung deutlich gravierender sind, als in der anderen Richtung. Insofern ist das Klassierungsproblem asymmetrisch. Sei die kritische Klasse ungültiger Fahrzeugparameter (die hier die Erkennung eines Fahrzeugs einer bestimmten Fahrzeugklasse bzw. die Zuordnung des Fahrzeugs zu der bestimmten Fahrzeugklasse definiert) mit U benannt, die andere Klasse gültiger Fahrzeugparameter mit G. Wird ein Element der Klasse U, als der Klasse G zugehörig klassiert, dann ist dies deutlich kritischer als umgekehrt. Es kommt hinzu, dass in der Lernphase nur sehr wenige Beispiele (Trainingsdatenpunkte) der Klasse U bekannt sind. Die Verteilung dieser sei beispielsweise unbekannt angenommen. Die Verteilung der Elemente von U ist nicht sinnvoll schätzbar angenommen, aufgrund der wenigen bekannten Beispiele. Gemäß einer Annahme erlauben die Trainingsdaten der Klasse G eine sinnvolle und hilfreiche Schätzung der Verteilung.

Aufgrund der Kritikalität der Klasse U bestehen erhöhte Anforderungen an die Lösung dieses Problems. Das Trainingsergebnis soll identisch reproduzierbar sein. Das Klassengebiet der Klasse U soll transparent und explizit darstellbar sein. Es soll außerdem einer sinnvollen Stetigkeitsannahme genügen. Es soll eine transparente Möglichkeit zur Justierung des Risikopuffers geben. Diese Anforderungen sollen besichern, dass kein Element von U als G eingeordnet wird.

Eine Aufgabe des hier vorgeschlagenen Ansatzes kann unter anderem in der Lösung eines Zwei-Klassen-Problems in der beschriebenen Form gesehen werden. Hierbei gelten im Sinne der Asymmetrie als Zielkriterien, mit Priorität 1, die Vermeidung der Klassierung eines Elementes der kritischen Klasse als unkritisch, und mit Priorität 2, die Maximierung der Zahl der als korrekt klassierten Elemente der unkritischen Klasse. Die Ergebnisse des Lernverfahrens sollen identisch reproduzierbar sein. Das Lernverfahren soll mit sehr wenigen Trainingsbeispielen für die kritische Klasse angewendet werden können. Aufgrund der Kritikalität einer der Klassen soll die gelernte Trennfunktion (d. h. das Unterscheidungskriterium) transparent und nachvollziehbar sein. Insbesondere ist die Möglichkeit einer expliziten Beschreibung sinnvoll. Die Trennfunktion soll zumindest eine sinnvolle Stetigkeitsbedingung erfüllen. Das Lernergebnis soll eine sinnvolle Justierung des Risikopuffers erlauben.

Das vorgeschlagene Verfahren umfasst insbesondere ein Lernverfahren, Repräsentationsformen für die Klassen als Lernergebnis und den Ablauf für die Ausführungsphase der Klassierung.

Es sind Problemstellungen denkbar, die mehr als zwei Klassen aufweisen. Die Anwendung des beschriebenen Verfahrens soll diese Problemstellungen lösen, sofern innerhalb dieser mindestens eine kritische und mindestens eine unkritische Klasse vorhanden sind.

Der hier vorgeschlagene Ansatz zur Lösung der vorstehend beschriebenen Aufgabe gliedert sich unter anderem in einen Lernschritt und einen Ausführungsschritt.

Im Lernschritt (Training) werden anhand der Trainingsdaten der Repräsentationen für die Klassen G und U erzeugt. Für die Klasse G wird zunächst deren Verteilungsdichte geschätzt. Vorteilhaft kann dies modellfrei geschehen, zum Beispiel mittels Kernel Density Estimation. Für die geschätzte Verteilungsdichte wird im Rahmen des Trainings ein Minimalwert festgelegt. Dieser Minimalwert kann null sein. Anhand der geschätzten Verteilungsdichte und des Minimalwerts des ergibt sich das Gebiet, d. h. der Bereich, der sich aus der Vereinigung der Bereiche 200 und 220 ergibt, innerhalb dessen Elemente der Klasse G erwartet werden (G-Gebiet). Die Form dieses Gebietes ist frei und entspricht einer ISO-Linie der geschätzten Verteilungsdichte. Eine Repräsentation kann zum Beispiel erfolgen durch eine Belegungskarte. Für die Klasse U wird anhand aller Trainingsdaten die konvexe Hülle bestimmt. Ebenfalls wird ein Sicherheitsabstand zur konvexen Hülle definiert. Dieser Schritt kann sowohl die Ausdehnung der konvexen Hülle als auch die Verteilungsdichte der Klasse G einbeziehen. Für die Ausführungsphase entscheidend ist bezüglich Klasse U nur die um den Sicherheitsabstand korrigierte konvexe Hülle (U-Gebiet, Bereich 245). Der Minimalwert für G als auch der Sicherheitsabstand für U können mittels Kreuzvalidierung ermittelt werden.

In der Ausführungsphase kann die Klassierung eines neuen Elementes e unbekannter Klasse in die Klasse G oder U erfolgen, also einer Fahrzeugklasse zugeordnet werden oder nicht dieser Fahrzeugklasse zugeordnet werden. Die Klassierung richtet sich nach folgendem beispielhaften Ablauf:
- Falls e innerhalb oder auf der Grenze des U-Gebietes liegt erfolgt eine Zuordnung zur Klasse U.
- Falls e außerhalb des U-Gebietes und außerhalb des G-Gebietes liegt erfolgt eine Zuordnung zu Klasse U.
- Falls e außerhalb des U-Gebietes und innerhalb des G-Gebietes liegt erfolgt eine Zuordnung zur Klasse G.

Der hier vorgeschlagene Ansatz weist gegenüber einem herkömmlichen Ansatz aus dem Stand der Technik folgende Kombination von Vorteilen auf:
- Der hier vorgeschlagene Ansatz kann mit wenigen Datenpunkten bezüglich der kritischen Klasse U angewendet werden.
- Der hier vorgeschlagene Ansatz liefert identisch reproduzierbare Ergebnisse beim Lernen und Ausführen.
- Der hier vorgeschlagene Ansatz liefert als ein Ergebnis der Lernphase eine Trennfunktion (Unterscheidungskriterium 160) in Form beispielsweise eines konvexen Polygons und eines durch Daten wohldefinierten Gebietes, wobei Letzteres beispielsweise einer ISO-Linie der Verteilung der unkritischen Messungen entspricht.
- Insbesondere das Gebiet U der kritischen Messungen gehorcht einer sinnvollen, datengetriebenen, stückweisen Stetigkeitsannahme beispielsweise in Form der konvexen Hülle um die bekannten kritischen Messungen zuzüglich Risikopuffer. Zugleich bietet die Art der Konstruktion der Gebiete U und G ein hohes Maß an Fähigkeit zur Separierung von Fahrzeugparametern.
- Der hier vorgestellte Ansatz erlaubt die transparente Justierung eines Risikopuffers in Form des Sicherheitsabstandes um die konvexe Hülle der kritischen Messungen.
- Der hier vorgestellte Ansatz erlaubt eine explizite Darstellung des Gebietes K der kritischen Messungen.
- Der hier vorgestellte Ansatz stellt sicher, dass jede einzelne Messung innerhalb des kritischen Gebietes U oder außerhalb des unkritischen Gebietes G als kritisch und ungültig eingestuft wird.
- Die Berechnungen der Ausführungsphase sind sehr effizient durchzuführen. Es bestehen geringe Anforderungen an die zu Grunde liegende Hardware und es ist eine Echtzeitapplikationen möglich.

Durch die hier beispielhaft verwendeten Kombinationen können skalare Merkmale x und y als physikalische Messgrößen oder aus einer oder mehreren physikalischen Messgrößen abgeleitete Werte verwendet werden, die als Parameter den Kombinationen zugrunde gelegt werden. Dabei können die physikalischen Messgrößen die Position, Qualität und Zeitpunkt der Einzelmesspunkte eines Objektes angeben. Auch kann eine Vorverarbeitung beispielsweise in der Berechnung der Ableitung vorgenommen werden. Es kann dann eine Zusammenfassung mehrerer elementarer Messgrößen zu einem Objekt bzw. Kombination 150 (Segmentierung) zu einem Zeitpunkt erfolgen. Eine Zusammenfassung von Objekten über mehrere Zeitpunkte zu einem Objektverlauf (Tracking) ist ebenfalls denkbar. Auch gibt es Möglichkeiten der Ableitung weiterer Größen, die auch geschichtet angewendet werden können. Auch können Gestaltmerkmale wie beispielsweise eine Geradheit als Summe der Gradientenbeträge benachbarter Punkte, Ausreißeranalyse als Extremwertbetrachtung auf der Referenzseite eines Objektes, Bewertung von Symmetrieeigenschaften oder Verlaufsmerkmale wie eine Gleichförmigkeit der Bewegung anhand Ausreißerbewertung in Regression, Veränderung der Gestaltmerkmale über die Zeit anhand Varianz genutzt werden, um die Objekte als Fahrzeuge möglichst gut klassieren zu können.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (500) zur Erkennung der Gültigkeit eines Fahrzeugparameters, wobei der Fahrzeugparameter eine aktuelle Geschwindigkeit oder eine Fahrzeugklasse repräsentiert und wobei das Verfahren (500) die folgenden Schritte aufweist:
- Einlesen (510) von zumindest einem ersten Parameter (140a) und zumindest einem zweiten Parameter (140b), wobei der erste Parameter (140a) eine erste physikalische Größe (130a) des Fahrzeugs (105) oder eine von der ersten physikalischen Größe (130a) abgeleitete Größe und der zweite Parameter (140b) eine zweite physikalische Größe (130b) des Fahrzeugs (105) oder eine von der zweiten physikalischen Größe (130b) abgeleitete Größe repräsentiert, wobei ferner ein Unterscheidungskriterium (160) zur Erkennung der Gültigkeit des Fahrzeugparameters des Fahrzeugs (105) anhand einer Kombination (150) des ersten (140a) und zweiten Parameters (140b) eingelesen wird; und
- Zuordnen (520) des Fahrzeugparameters als gültigem Fahrzeugparameter, wenn eine Kombination (150) des ersten (140a) und zweiten Parameters (140b) das Unterscheidungskriterium (160) erfüllt,
**dadurch gekennzeichnet, dass**
im Schritt (510) des Einlesens ein Unterscheidungskriterium (160) eingelesen wird, das einen Bereich (200, 220) von Tupeln abgrenzt, die durch Kombinationen (150) der ersten und zweiten Parameter (140a, 140b) als Objekten des Tupels gebildet wird, wobei im Schritt (520) des Zuordnens der Fahrzeugparameter dann als gültiger Fahrzeugparameter zugeordnet wird, wenn eine Kombination (150) des ersten und zweiten Parameters (140a, 140b) innerhalb dieses Bereichs (200, 220) liegt.

2. Verfahren (500) gemäß Anspruch 1, **dadurch gekennzeichnet, dass** im Schritt (510) des Einlesens ein Unterscheidungskriterium (160) eingelesen wird, bei dem das Unterscheidungskriterium (160) zumindest einen von dem Bereich (200) unterschiedlichen und/oder von dem Bereich (200) getrennt angeordneten Teilbereich (220) aufweist.

3. Verfahren (500) gemäß einem der vorangegangenen Ansprüche, **dadurch gekennzeichnet, dass** im Schritt (510) des Einlesens als erster oder zweiter Parameter (140a, 140b) je eine Geschwindigkeit, eine Position, eine erkannte Größe (130) des Fahrzeugs (105) oder ein eine Qualität einer physikalischen Messung repräsentierender Parameter zu einem bestimmten Zeitpunkt oder ein aus einer dieser physikalischen Größen (130a, 130b) gebildeter Parameter (140a, 140b) eingelesen wird.

4. Verfahren (500) gemäß einem der vorangegangenen Ansprüche, **dadurch gekennzeichnet, dass** im Schritt (520) des Zuordnens der Fahrzeugparameter als nicht gültiger Fahrzeugparameter erkannt wird, wenn die Kombination (150) des ersten und zweiten Parameters (140a, 140b) das Unterscheidungskriterium (160) nicht erfüllt.

5. Verfahren (500) gemäß einem der vorangegangenen Ansprüche, **dadurch gekennzeichnet, dass** im Schritt des Einlesens (510) ein weiteres Unterscheidungskriterium (160) eingelesen wird, das einen sich von dem Bereich zumindest teilweise unterscheidenden weiteren Bereich (245) von Tupeln abgrenzt, die durch Kombinationen (150) der ersten und zweiten Parameter (140a, 140b) als Objekten gebildet wird, wobei im Schritt des Zuordnens (520) der Fahrzeugparameter dann als gültiger Fahrzeugparameter zugeordnet wird, wenn die Kombination (150) des ersten und zweiten Parameters (140a, 140b) innerhalb des Bereichs (200, 220) und nicht innerhalb des weiteren Bereichs (245) liegt.

6. Verfahren (500) gemäß einem der vorangegangenen Ansprüche, **gekennzeichnet, durch** einen Schritt des Ermittelns einer Eigenschaft des Fahrzeugs (105) unter Verwendung eines Fahrzeugparameters, der als gültiger Fahrzeugparameter zugeordnet wurde, insbesondere wobei die ermittelte Eigenschaft des Fahrzeugs (105) eine Geschwindigkeit des Fahrzeugs (105) oder eine Fahrzeugklasse repräsentiert, in die das Fahrzeug (105) eingeteilt wurde.

7. Verfahren (500) gemäß einem der vorangegangenen Ansprüche, **dadurch gekennzeichnet, dass** im Schritt des Zuordnens (520) Kombinationen (150) mehrerer, zu unterschiedlichen Zeitpunkten erfassten erster Parameter (140a) und mehrerer, zu unterschiedlichen Zeitpunkten erfassten zweiter Parameter (140b) verwendet werden.

8. Verfahren (600) zum Bilden eines Unterscheidungskriteriums (160) zur Erkennung der Gültigkeit eines Fahrzeugparameters wobei der Fahrzeugparameter eine aktuelle Geschwindigkeit oder eine Fahrzeugklasse repräsentiert und wobei das Verfahren (600) die folgenden Schritte aufweist:
- Einlesen (610) von ersten Parametern (140a) und zweiten Parametern (140b), wobei die ersten Parameter (140a) eine erste physikalische Größe (130a) oder eine von der ersten physikalischen Größe (130a) abgeleitete Größe einen gültigen Fahrzeugparameter des Fahrzeugs (105) und die zweiten Parameter (140b) eine zweite physikalische Größe (130b) oder eine von der zweiten physikalischen Größe (130b) abgeleitete Größe einen gültigen Fahrzeugparameter des Fahrzeugs (105) repräsentiert; und
- Ermitteln (620) des Unterscheidungskriteriums (160) als demjenigen Bereich (200, 220) von Kombinationen (150) des ersten und zweiten Parameters (140a, 140b), deren Auftrittshäufigkeit über einem Schwellwert liegen, um den Bereich (200, 220) als Teil des Unterscheidungskriteriums (160) zu bilden,
**dadurch gekennzeichnet, dass**
im Schritt (620) des Ermittelns das Unterscheidungskriterium (160) derart ermittelt wird, dass es einen Bereich (200, 220) von Tupeln abgrenzt, die durch Kombinationen (150) der ersten und zweiten Parameter (140a, 140b) als Objekten des Tupels gebildet wird, denen der Fahrzeugparameter dann als gültiger Fahrzeugparameter zugeordnet wird, wenn eine Kombination (150) des ersten und zweiten Parameters (140a, 140b) innerhalb dieses Bereichs (200, 220) liegt.

9. Verfahren (600) gemäß Anspruch 8, **dadurch gekennzeichnet, dass** im Schritt des Einlesens (610) weitere erste Parametern (140a) und weitere zweite Parametern (140b) eingelesen werden, wobei die weiteren ersten Parameter (140a) eine weitere erste physikalische Größe (130a) oder eine von der weiteren ersten physikalischen Größe (130a) abgeleitete Größe eines nicht-gültigen Fahrzeugparameters des Fahrzeugs (105) und die weiteren zweiten Parameter (140b) eine weitere zweite physikalische Größe (130b) oder eine von der weiteren zweiten physikalischen Größe (130b) abgeleitete Größe eines nicht-gültigen Fahrzeugparameters des Fahrzeugs (105) eingelesen werden und wobei im Schritt (620) des Ermittelns, ein Ausschlussbereich (320) von Kombinationen (150) des weiteren ersten und weiteren zweiten Parameters (140a, 140b) ermittelt wird, deren Auftrittshäufigkeit über einem Schwellwert liegen oder die innerhalb oder auf der Grenze der konvexen Hülle derselben liegen, insbesondere wobei ein Sicherheitsbereich (330) ermittelt wird, um den der Ausschlussbereich (320) vergrößert wird, um zum Bilden des Unterscheidungskriteriums (160) einen weiteren Bereich (245) zu ermitteln.

10. Verfahren (600) gemäß einem der vorangegangenen Ansprüche 8 oder 9, **dadurch gekennzeichnet, dass** im Schritt des Einlesens (610) als erster oder zweiter Parameter (140a, 140b) je eine Geschwindigkeit, eine Position, eine erkannte Größe des Fahrzeugs (105) oder ein eine Qualität einer physikalischen Messung repräsentierender Parameter zu einem bestimmten Zeitpunkt oder eine aus einer dieser physikalischen Größen gebildeter Parameter (140a, 140b) eingelesen wird.

11. Verfahren (600) gemäß einem der vorangegangenen Ansprüche 8 bis 10, **dadurch gekennzeichnet, dass** im Schritt (620) des Ermittelns eine Auftrittshäufigkeit von Kombinationen (150) mehrerer, zu unterschiedlichen Zeitpunkten erfassten erster Parameter (140a) und mehrerer, zu unterschiedlichen Zeitpunkten erfassten zweiter Parameter (140b) verwendet wird, um das Unterscheidungskriterium (160) zu bilden.

12. Vorrichtung (115, 400), die eingerichtet ist, um die Schritte eines der Verfahren (500, 600) gemäß einem der vorangegangenen Ansprüche 1 bis 7 oder 8 bis 11 in entsprechenden Einheiten auszuführen und/oder anzusteuern.

13. Computerprogramm, umfassend Befehle, die bei der Ausführung des Computerprogramms durch einen Computer diesen veranlassen, die Schritte (510, 520; 610, 620) eines der Verfahren (500, 600) gemäß einem der vorangegangenen Ansprüche 1 bis 7 oder 8 bis 11 auszuführen und/oder anzusteuern.

14. Maschinenlesbares Speichermedium, auf dem das Computerprogramm nach Anspruch 13 gespeichert ist.

## Claims

1. A method (500) for recognizing the validity of a vehicle parameter, wherein the vehicle parameter represents a current speed or a vehicle class and wherein the method (500) comprises the following steps:
- inputting (510) at least one first parameter (140a) and at least one second parameter (140b), wherein the first parameter (140a) represents a first physical variable (130a) of the vehicle (105) or a variable derived from the first physical variable (130a) and the second parameter (140b) represents a second physical variable (130b) of the vehicle (105) or a variable derived from the second physical variable (130b), wherein furthermore a distinction criterion (160) for recognizing the validity of the vehicle parameter (105) on the basis of a combination (150) of the first (140a) and second parameter (140b) is input; and
- assigning (520) the vehicle parameter as a valid vehicle parameter if a combination (150) of the first (140a) and second parameter (140b) meets the distinction criterion (160),
**characterized in that**
in the step (510) of inputting, a distinction criterion (160) is input, which delimits a range (200, 220) of tuples formed by combinations (150) of the first and second parameters (140a, 140b) as objects of the tuple, wherein in the step (520) of assigning, the vehicle parameters are assigned as valid vehicle parameters if a combination (150) of the first and second parameter (140a, 140b) is located within this range (200, 220).

2. The method (500) as claimed in claim 1, **characterized in that**, in the step (510) of inputting, a distinction criterion (160) is input, in which the distinction criterion (160) has at least one partial range (220) different from the range (200) and/or arrange separately from the range (200).

3. The method (500) as claimed in any one of the preceding claims, **characterized in that**, in the step (510) of inputting, a speed, a position, a recognized size (130) of the vehicle (105) or a parameter representing a quality of a physical measurement at a specific time or a parameter (140a, 140b) formed from one of these physical variables (130a, 130b) is input in each case as the first or second parameter (140a, 140b).

4. The method (500) as claimed in any one of the preceding claims, **characterized in that** in the step (520) of assigning, the vehicle parameter is recognized as an invalid vehicle parameter if the combination (150) of the first and second parameter (140a, 140b) does not meet the distinction criterion (160).

5. The method (500) as claimed in any one of the preceding claims, **characterized in that** in the step of inputting (510), a further distinction criterion (160) is input, which delimits a further range (245) of tuples at least partially differing from the range, which is formed by combinations (150) of the first and second parameter (140a, 140b) as objects, wherein in the step of assigning (520), the vehicle parameter is assigned as a valid vehicle parameter if the combination (150) of the first and second parameter (140a, 140b) is located within the range (200, 220) and not within the further range (245).

6. The method (500) as claimed in any one of the preceding claims, **characterized by** a step of determining a property of the vehicle (105) using a vehicle parameter, which was assigned as a valid vehicle parameter, in particular wherein the determined property of the vehicle (105) represents a speed of the vehicle (105) or a vehicle class into which the vehicle (105) was classified.

7. The method (500) as claimed in any one of the preceding claims, **characterized in that**, in the step of assigning (520), combinations (150) of multiple first parameters (140a) detected at different times and multiple second parameters (140b) detected at different times are used.

8. A method (600) for forming a distinction criterion (160) for recognizing the validity of a vehicle parameter, wherein the vehicle parameter represents a current speed or a vehicle class and wherein the method (600) comprises the following steps:
- inputting (610) first parameters (140a) and second parameters (140b), wherein the first parameter (140a) represents a first physical variable (130a) or a variable of a valid vehicle parameter of the vehicle (105) derived from the first physical variable (130a) and the second parameter (140b) represents a second physical variable (130b) or a variable of a valid vehicle parameter of the vehicle (105) derived from the second physical variable (130b); and
- determining (620) the distinction criterion (160) as the range (200, 220) of combinations (150) of the first and second parameter (140a, 140b), the occurrence frequency of which is above a threshold value, in order to form the range (200, 220) as part of the distinction criterion (160),
**characterized in that**
in the step (620) of determining, the distinction criterion (160) is determined such that it delimits a range (200, 220) of tuples, which is formed by combinations (150) of the first and second parameter (140a, 140b) as objects of the tuple, to which the vehicle parameter is then assigned as a valid vehicle parameter if a combination (150) of the first and second parameter (140a, 140b) is located within this range (200, 220).

9. The method (600) as claimed in claim 8, **characterized in that**, in the step of inputting (610), further first parameters (140a) and further second parameters (140b) are input, wherein the further first parameter (140a) represents a further first further vehicle variable (130a) or a variable of an invalid vehicle parameter of the vehicle (105) derived from the further first physical variable (130a) and the further second parameter (140b) represents a further second physical variable (130b) or a variable of an invalid vehicle parameter of the vehicle (105) derived from the further second physical variable (130b) and wherein in the step (620) of determining, an exclusion range (320) of combinations (150) of the further first and further second parameter (140a, 140b) is determined, the occurrence frequency of which is above a threshold value or which are located inside or on the boundary of the convex envelope, in particular wherein a safety range (330) is determined, by which the exclusion range (320) is enlarged in order to determine a further range (245) to form the distinction criterion (160).

10. The method (600) as claimed in either one of preceding claims 8 or 9, **characterized in that**, in the step of inputting (160), a speed, a position, a recognized size of the vehicle (105), or a parameter representing a quality of a physical measurement at a specific time or a parameter (140a, 140b) formed from one of these physical variables is input as the first or second parameter (140a, 140b).

11. The method (600) as claimed in any one of preceding claims 8 to 10, **characterized in that**, in the step (620) of determining, an occurrence frequency of combinations (150) of multiple first parameters (140a) detected at different times and multiple second parameters (140b) detected at different times is used to form the distinction criterion (160).

12. A device (115, 400) configured to execute and/or actuate the steps of one of the methods (500, 600) according to one of the claims 1 to 7 or 8 to 11 in corresponding units.

13. A computer program comprising commands which, when the computer program is executed by a computer, cause it to execute and/or actuate the steps (510, 520; 610, 620) of one of the methods (500, 600) as claimed in any one of preceding claims 1 to 7 or 8 to 11.

14. A machine-readable storage medium on which the computer program as claimed in claim 13 is stored.

## Revendications

1. Procédé (500) de reconnaissance de la validité d'un paramètre de véhicule, le paramètre de véhicule représentant une vitesse actuelle ou une classe de véhicule, et le procédé (500) comprenant les étapes suivantes :
- la lecture (510) d'au moins un premier paramètre (140a) et d'au moins un second paramètre (140b), le premier paramètre (140a) représentant une première variable physique (130a) du véhicule (105) ou une variable dérivée de la première variable physique (130a) et le second paramètre (140b) représentant une seconde variable physique (130b) du véhicule (105) ou une variable dérivée de la seconde variable physique (130b), un critère de distinction (160) destiné à reconnaître la validité du paramètre de véhicule du véhicule (105) au moyen d'une combinaison (150) des premier (140a) et second paramètres (140b) étant également lu ; et
- l'attribution (520) du paramètre de véhicule en tant que paramètre de véhicule valide si une combinaison (150) du premier paramètre (140a) et du second paramètre (140b) satisfait le critère de distinction (160),
**caractérisé en ce que**
lors de l'étape de lecture (510), un critère de distinction (160) est lu, lequel délimite une zone (200, 220) de tuples qui est formée par des combinaisons (150) des premier et second paramètres (140a, 140b) en tant qu'objets du tuple, et lors de l'étape d'attribution (520), le paramètre de véhicule est alors attribué en tant que paramètre de véhicule valide si une combinaison (150) des premier et second paramètres (140a, 140b) se situe dans cette zone (200, 220).

2. Procédé (500) selon la revendication 1, **caractérisé en ce que**, lors de l'étape de lecture (510), un critère de distinction (160) est lu, le critère de distinction (160) présentant au moins une sous-zone (220) qui est différente de la zone (200) et/ou qui est disposée séparément de la zone (200).

3. Procédé (500) selon l'une quelconque des revendications précédentes, **caractérisé en ce que**, lors de l'étape de lecture (510), sont respectivement lus, en tant que premier ou second paramètre (140a, 140b), une vitesse, une position, une variable reconnue (130) du véhicule (105) ou un paramètre représentant une qualité d'une mesure physique à un instant spécifique, ou un paramètre (140a, 140b) formé à partir de l'une de ces variables physiques (130a, 130b).

4. Procédé (500) selon l'une quelconque des revendications précédentes, **caractérisé en ce que**, lors de l'étape d'attribution (520) des paramètres de véhicule, le paramètre de véhicule est reconnu en tant que paramètre de véhicule non valide si la combinaison (150) des premier et second paramètres (140a, 140b) ne satisfait pas le critère de distinction (160).

5. Procédé (500) selon l'une quelconque des revendications précédentes, **caractérisé en ce que**, lors de l'étape de lecture (510), un autre critère de distinction (160) est lu, lequel délimite une autre zone (245) de tuples qui diffère au moins partiellement de la zone et qui est formée par des combinaisons (150) des premier et second paramètres (140a, 140b) en tant qu'objets, et lors de l'étape d'attribution (520), le paramètre de véhicule est alors attribué en tant que paramètre de véhicule valide si la combinaison (150) des premier et second paramètres (140a, 140b) se situe dans la zone (200, 220) et non dans l'autre zone (245).

6. Procédé (500) selon l'une quelconque des revendications précédentes, **caractérisé par** une étape de détermination d'une propriété du véhicule (105) en utilisant un paramètre de véhicule qui a été attribué en tant que paramètre de véhicule valide, en particulier dans lequel la propriété déterminée du véhicule (105) représente une vitesse du véhicule (105) ou une classe de véhicule dans laquelle le véhicule (105) a été classé.

7. Procédé (500) selon l'une quelconque des revendications précédentes, **caractérisé en ce que**, lors de l'étape d'attribution (520), des combinaisons (150) d'une pluralité de premiers paramètres (140a) détectés à des instants différents et d'une pluralité de seconds paramètres (140b) détectés à des instants différents sont utilisées.

8. Procédé (600) de création d'un critère de distinction (160) destiné à reconnaître la validité d'un paramètre de véhicule, le paramètre de véhicule représentant une vitesse actuelle ou une classe de véhicule, et le procédé (600) comprenant les étapes suivantes :
- la lecture (610) de premiers paramètres (140a) et de seconds paramètres (140b), les premiers paramètres (140a) représentant une première variable physique (130a) ou une variable dérivée de la première variable physique (130a) d'un paramètre de véhicule valide du véhicule (105), et les seconds paramètres (140b) représentant une seconde variable physique (130b) ou une variable dérivée de la seconde variable physique (130b) d'un paramètre de véhicule valide du véhicule (105) ; et
- la détermination (620) du critère de distinction (160) comme étant la zone (200, 220) de combinaisons (150) des premier et second paramètres (140a, 140b) dont la fréquence d'occurrence est supérieure à une valeur seuil, afin de former la zone (200, 220) en tant que partie du critère de distinction (160),
**caractérisé en ce que**
lors de l'étape de détermination (620), le critère de distinction (160) est déterminé de telle sorte qu'il délimite une zone (200, 220) de tuples qui est formée par des combinaisons (150) des premier et second paramètres (140a, 140b) en tant qu'objets du tuple, auxquels le paramètre de véhicule est ensuite attribué en tant que paramètre de véhicule valide si une combinaison (150) des premier et second paramètres (140a, 140b) se situe dans cette zone (200, 220).

9. Procédé (600) selon la revendication 8, **caractérisé en ce que**, lors de l'étape de lecture (610), d'autres premiers paramètres (140a) et d'autres seconds paramètres (140b) sont lus, les autres premiers paramètres (140a) représentant une autre première variable physique (130a) ou une variable dérivée de l'autre première variable physique (130a) d'un paramètre de véhicule non valide du véhicule (105), et les autres seconds paramètres (140b) représentant une autre seconde variable physique (130b) ou une variable dérivée de l'autre seconde variable physique (130b) d'un paramètre de véhicule non valide du véhicule (105), et lors de l'étape de détermination (620), une zone d'exclusion (320) de combinaisons (150) de l'autre premier et de l'autre second paramètre (140a, 140b) est déterminée, dont la fréquence d'occurrence se situe au-dessus d'une valeur seuil ou qui se situent à l'intérieur ou sur la frontière de l'enveloppe convexe de celles-ci, en particulier dans lequel une zone de sécurité (330) est déterminée, de laquelle la zone d'exclusion (320) est augmentée afin de déterminer une autre zone (245) pour créer le critère de distinction (160).

10. Procédé (600) selon l'une quelconque des revendications précédentes 8 et 9, **caractérisé en ce que**, lors de l'étape de lecture (610), sont respectivement lus, en tant que premier ou second paramètre (140a, 140b), une vitesse, une position, une variable reconnue du véhicule (105) ou un paramètre représentant une qualité d'une mesure physique à un instant spécifique, ou un paramètre (140a, 140b) formé à partir de l'une de ces variables physiques.

11. Procédé (600) selon l'une quelconque des revendications précédentes 8 à 10, **caractérisé en ce que**, lors de l'étape de détermination (620), une fréquence d'occurrence de combinaisons (150) d'une pluralité de premiers paramètres (140a) détectés à des instants différents et d'une pluralité de seconds paramètres (140b) détectés à des instants différents est utilisée pour créer le critère de distinction (160).

12. Dispositif (115, 400) conçu pour exécuter et/ou commander les étapes de l'un des procédés (500, 600) selon l'une quelconque des revendications 1 à 7 ou 8 à 11 dans des unités correspondantes.

13. Programme informatique comprenant des instructions qui, lorsque le programme informatique est exécuté par un ordinateur, amènent celui-ci à exécuter et/ou à commander les étapes (510, 520 ; 610, 620) de l'un des procédés (500, 600) selon l'une quelconque des revendications 1 à 7 ou 8 à 11 précédentes.

14. Support de stockage lisible par machine sur lequel le programme informatique selon la revendication 13 est mémorisé.
